# EUROPÄISCHE PATENTSCHRIFT

(11) **EP 1 035 981 B1**
(45) Veröffentlichungstag und Bekanntmachung des Hinweises auf die Patenterteilung: **14.09.2005**
(21) Anmeldenummer: 99945949.8
(22) Anmeldetag: 09.07.1999
(51) Int. Cl.: B60H 1/32

(54) **MIT CO2-BETREIBBARE KLIMAANLAGE**
CO2-OPERATED AIR CONDITIONING SYSTEM
CLIMATISEUR POUVANT FONCTIONNER AU CO2

(30) Priorität: 20.07.1998 DE 19832479
(43) Veröffentlichungstag der Anmeldung: 20.09.2000
(73) Patentinhaber: FORD-WERKE AKTIENGESELLSCHAFT, 50735 Köln (DE)
(72) Erfinder: DIENHART, Bernd, D-50935 Köln (DE); KATZENBERGER, Michael, D-74336 Brackenheim (DE); KRAUSS, Hans-Joachim, D-70567 Stuttgart (DE); LOCHMAHR, Karl, D-71665 Vaihingen (DE); MITTELSTRASS, Hagen, D-71149 Bondorf (DE); STRAUSS, Werner, D-74321 Bietigheim (DE); STAFFA, Karl-Heinz, D-70567 Stuttgart (DE); WALTER, Christoph, D-70376 Stuttgart (DE)
(74) Vertreter: Heyner, Klaus
(86) Internationale Anmeldenummer: PCT/DE1999/002127
(87) Internationale Veröffentlichungsnummer: WO 2000/003883

(56) Entgegenhaltungen:
- EP-A- 0 439 992
- EP-A- 0 915 306
- WO-A-90/07683
- DE-C- 19 536 972
- US-A- 3 786 651

## Beschreibung

Die Erfindung betrifft eine mit CO₂ betreibbare Klimaanlage für ein Fahrzeug nach dem Oberbegriff von Anspruch 1.

Um bei mit CO₂ (Kältemittel R744) betriebenen Klimaanlagen eine optimale Kälteleistung und eine optimale Leistungszahl zu erzielen, sind die bekannten Klimaanlagen mit aufwendigen Regelungen vorgesehen, die nicht nur den Kompressor regeln, sondern auch den Hochdruck mittels eines verstellbaren, teuren Expansionsventils, wofür auch noch ein Hochdrucksensor erforderlich ist Die Hochdruckregelung wird von der Fachwelt für erforderlich gehalten, da die geforderte Kälteleistung, die von der Temperatur der Außenumgebung und von der gewünschten Abkühlung abhängig ist, mit optimaler Leistungszahl bei diesen Leistungszahlen zugeordneten optimalen Hochdrücken verwirklicht werden kann. Mittels des geregelten Expansionsventils wird angestrebt, die Klimaanlage in jedem Betriebszustand mit dem Hochdruck zu betreiben, in welchem das Optimum der Kälteleistung und das Optimum der Leistungszahl (COP) liegt Dadurch wird erreicht, daß die mit CO₂ betriebenen Klimaanlagen mit Klimaanlagen gleichwertig oder diesen teilweise sogar überlegen sind, die mit anderen Kältemitteln, beispielsweise dem Kältemittel R134a, betrieben werden. Obwohl die mit CO₂ betriebenen Klimaanlagen anerkanntermaßen umweltfreundlicher sind, als die mit anderen Kältemitteln betriebenen Klimaanlagen, stehen ihrer praktischen Verwirklichung deutlich erhöhte Herstellungskosten entgegen.

Aus der WO-A-9007683 ist eine mit CO₂ betreibbare Klimaanlage für ein Fahrzeug bekannt, mit einem am Ausgang eines Kompressors angeschlossenen Hochdruckabschnitt mit einem Gaskühler und einem an die Saugseite des Kompressors angeschlossenen Niederdruckabschnitt mit einem Verdampfer, wobei zwischen dem Hochdruckabschnitt und dem Niederdruckabschnitt ein Expansionsorgan geschaltet ist, wodurch der Druck im Hochdruckabschnitt auf Werte von etwa 11 MPa begrenzt ist.

Die DE 19536972 C1 beschreibt für ein Fahrzeug eine Klimaanlage, bei der ein den Hochdruckabschnitt mit dem Niederdruckabschnitt verbindendes Expansionsorgan vorgesehen und das als Festdrossel ausgebildet ist.

Der Erfindung liegt die Aufgabe zugrunde, eine Klimaanlage der eingangs genannten Art zu schaffen, deren Herstellungskosten verringert sind.

Diese Aufgabe wird gemäß der Erfindung mit den Merkmalen nach dem Anspruch 1 gelöst. Vorteilhafte Weiterbildungen der Erfindung sind in den Ansprüchen 2 bis 5 beschrieben.

Es hat sich überraschend herausgestellt, daß eine Klimaanlage mit einer derart ausgelegten Festdrossel in der Nahe der Optima von Kälteleistung und Leistungszahl betrieben werden kann, so daß auf ein teures Expansionsventil und dessen Regelung verzichtet werden kann. Dadurch läßt sich eine deutliche Preisreduzierung verwirklichen, ohne daß nennenswerte Einbußen bezüglich Kälteleistung und Leistungszahl in Kauf genommen werden müssen.

Das parallel zur Festdrossel geschaltete Druckbegrenzungsventil trägt dabei in vorteilhafter Weise dazu bei, daß der maximal auftretende Druck auf einen Wert begrenzt wird, der etwas oberhalb des von der Festdrossel eingestellten Druckwertes liegt, beispielsweise bei 16 MPa.

Von Vorteil ist dabei ferner, daß die Festdrossel ein umschaltbares Drosselelement mit wenigstens zwei unterschiedlichen Drosselöffnungen enthält. Das umschaltbare Drosselelement läßt sich beispielsweise in Abhängigkeit von dem Druck und/oder der Temperatur verstellen, so daß eine jeweils geeignete Drosselöffnung mit einem vorgegebenen Drosselquerschnitt zum Einsatz kommt. Damit ist es möglich, mittels einer einfachen Steuerung die Klimaanlage bezüglich der Optima an Kälteleistung und Leistungszahl noch etwas zu verbessern.

Bei einer vorteilhaften Ausführungsform der Erfindung ist vorgesehen, daß das Druckbegrenzungsventil und die Festdrossel als eine Baueinheit ausgebildet sind. Damit läßt sich ein relativ einfaches und entsprechend preiswertes Expansionsorgan schaffen.

Die gemäß weiterer Ausgestaltung vorgesehene, wenigstens zweistufig betreibbare Gebläseanordnung trägt dazu bei, in beschränktem Umfang den Hochdruck durch Veränderung der Anströmung des Gaskühlers zu regeln.

Die gleiche Wirkung wie mit der Erfindung läßt sich darüber hinaus erzielen, wenn gemäß weiterer Ausgestaltung zwei oder mehr parallel geschaltete Festdrosseln vorgesehen sind, die mittels eines zugeordneten Ventils zum Einsatz bringbar sind.

Die gemäß weiterer Ausgestaltung der Erfindung vorgesehene Dimensionierung der Festdrossel ist für eine Klimaanlage mit einer für Kraftfahrzeuge bevorzugten, optimalen Leistung in vorteilhafter Weise einsetzbar.

Weitere Merkmale und Vorteile der Erfindung ergeben sich aus der nachfolgenden Beschreibung der in der Zeichnung dargestellten Ausführungsbeispiele.
- Fig. 1: zeigt ein Schaltbild einer Klimaanlage mit einem als Festdrossel ausgebildeten Expansionsorgan,
- Fig. 2: eine Ausführungsform mit einer Festdrossel und einem parallel geschalteten Druckbegrenzungsventil und
- Fig. 3: einen Schnitt aus einer Baueinheit von Festdrossel und Druckbegrenzungsventil.

CO₂ (Kohlendioxid) hat eine relativ niedrige kritische Temperatur (31,1 °C), so daß eine mit CO₂ betriebene Klimaanlage eine gegenüber mit anderen Kältemitteln betriebenen Klimaanlagen geänderte Prozeßführung bedingt, auch wenn auf den ersten Blick die Klimaanlage als solche sehr ähnlich aufgebauterscheint Die Klimaanlage enthält einen regelbaren Kompressor 10. Die Regelung des Kompressors 10 erfolgt durch Ein- und Ausschalten, oder durch eine interne Regelung oder durch eine externe Verstellung des Kompressorhubes. Der Kompressor sollte einen isentropen Wirkungsgrad von wenigstens 0,6 und einen Liefergrad von wenigstens 0,6 aufweisen. An den Ausgang des Kompressors 10 schließt ein Hochdruckabschnitt an, der einen Gaskühler 11 enthält. Dieser Gaskühler 11 ist so gestaltet, daß er einen Austauschgrad von wenigstens 0,7 besitzt. Der Hochdruckabschnitt enthält ferner einen inneren Wärmeübertrager 12, durch dessen ersten Zweig hindurch das Kältemittel zu einer Festdrossel 13 als Expansionsorgan gelangt. Um einen wirkungsvollen Betrieb der Klimaanlage zu erhalten, sind in dem Hochdruckabschnitt Hochdrücke bis zu 12 MPa und ggf. bis zu 14 MPa erforderlich.

Mittels der Festdrossel 13 wird das Kältemittel auf Drücke zwischen 3,5 MPa und 5 MPa entspannt und gelangt denn in den Niederdruckabschnitt. Dieser Niederdruckabschnitt enthält einen Verdampfer 14, der über einen Akkumulator 15 und den inneren Wärmeübertraqer 12 an die Saugseite des Kompressors 10 angeschlossen ist. Der Verdampfer 14 hat einen Austauschgrad von wenigstens 0,7. Der Akkumulator hat ein Volumen von mehr als 40 cm³. Der innere Wärmetauscher 12, durch dessen ersten Zweig das unter Hochdruck stehende Kältemittel und durch dessen zweiten Zweig entspannte Kältemittel hindurchströmen, hat einen Austauschgrad von wenigstens 0,4. Die Leitungen, die die einzelnen Elemente miteinander verbinden, haben in dem Hochdruckabschnitt einen Innendurchmesser von 2 mm bis etwa 8 mm. Die Leitungen des Niederduckabschnittes haben einen größeren Innendurchmesser, d.h. einen Innendurchmesser von etwa 3 mm bis 10 mm.

Der Kreislauf der Klimaanlage wird mittels einer elektronischen Steuereinheit 16 geregelt, in die von einem Sensor 17 die Temperatur der durch den Verdampfer 14 geströmten, abgegebenen Luft eingegeben wird. Ferner ist in der Niederdruckleitung zwischen dem inneren Wärmeübertrager 12 und dem Sauganschluß des Kompressors 10 ein Drucksensor 18 angeordnet, der die Höhe des Saugdruckes erfaßt und an die Steuereinheit 16 weitergibt. Abhängig von diesen erfaßten Werten und von Eingaben der Umgebungstemperatur und der gewünschten Abkühlung erfolgt eine Regelung des Kreislaufs durch Regelung des Kompressors 10.

Die als Expansionsorgan vorgesehene Festdrossel 13 weist eine Drosselöffnung mit vorgegebenem Querschnitt und vorgegebener Länge auf. Die Länge der Drosselöffnung und der Querschnitt der Drosselöffnung sind so auf die Anlage abgestimmt, daß der in allen Betriebszuständen auftretende maximale Hochdruck in dem Hochdruckabschnitt auf maximal 14 MPa begrenzt ist.

Es hat sich gezeigt, daß mit einer derart ausgelegten Festdrossel ein Betrieb der Klimaanlage im Bereich der Optima für Kälteleistung und Leistungszahl möglich ist, die für einen praktischen Betrieb einer Klimaanlage für ein Kraftfahrzeug völlig ausreichend ist. Es genügt für diese Klimaanlage daher, wenn nur der Kompressor 10 geregelt wird, so daß eine wesentliche Einsparung an Kosten erzielt wird.

Die Drosselwirkung der Festdrossel 13 wird durch die Länge und den Querschnitt der Drosselöffnung bestimmt. Für eine Klimaanlage mit einer Leistung von etwa 7 kW ist eine Drosselöffnung mit etwa 10 mm Länge und einem Querschnitt von etwa 1,0 mm geeignet. Bei höheren Leistungen müssen die Länge und/oder der Querschnitt der Drosselöffnung entsprechend angepaßt werden. Dieses Anpassen kann nach einer Überschlagsrechnung dann empirisch mittels Versuchen durchgeführt werden.

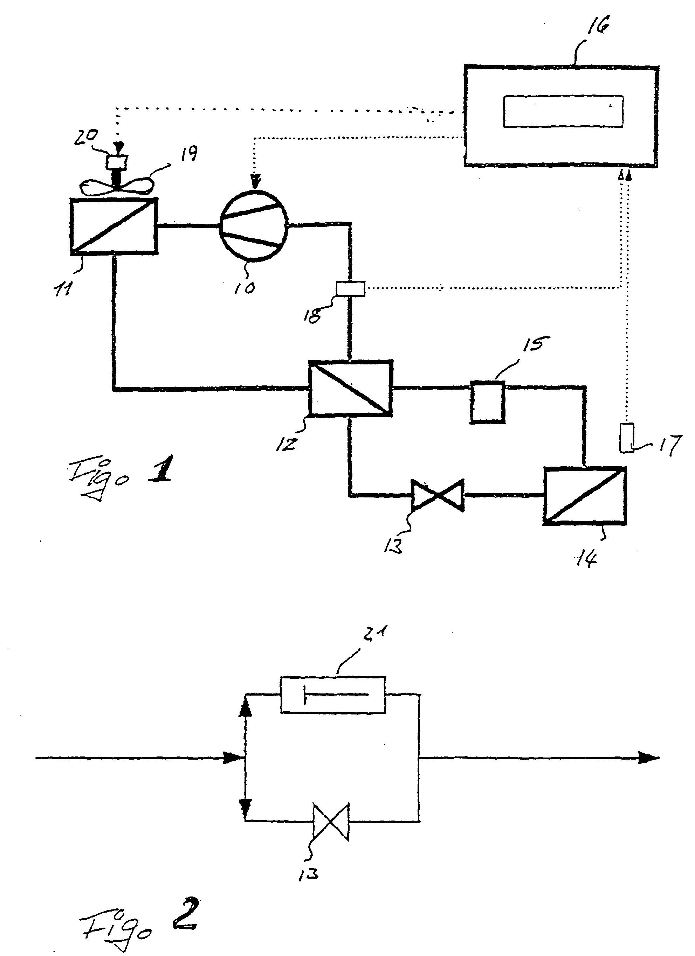

Dem Gaskühler 11 der Klimaanlage nach Fig. 1 ist ein Gebläse 19 zugeordnet, das beispielsweise mit einem in mehreren Leistungsstufen betreibbaren Elektromotor 20 angetrieben ist. In beschränktem Umfange ist eine Einstellung oder Regelung des Hochdruckes durch entsprechende Veränderung der Leistung des Gebläses 19 und/oder der Anströmung des Gaskühlers 11 durch das Gebläse 19 möglich.

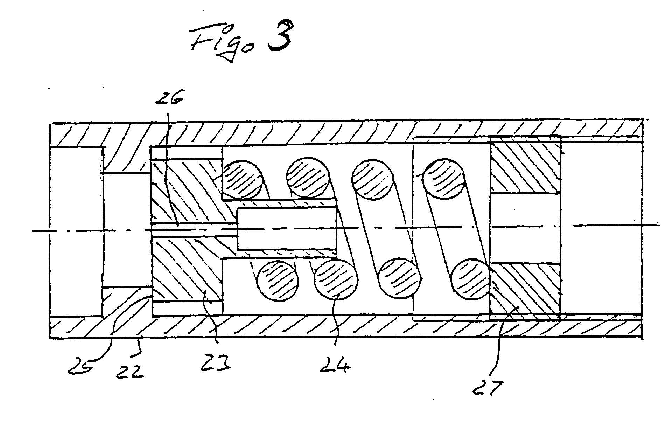

Bei dem Ausführungsbeispiel nach Fig. 2 ist parallel zu der Festdrossel 13 ein Druckbegrenzungsventil 21 geschaltet, das den maximalen Druck des Hochdruckabschnittes begrenzt. Das Druckbegrenzungsventil 21 wird so ausgelegt, daß es bei Drücken öffnet, die etwas über den Drücken liegen, auf die Festdrossel 13 den Hochdruck begrenzt. Beispielsweise wird für das Druckbegrenzungsventil ein Öffnungsdruck von 16 MPa vorgesehen.

Wie in Fig. 3 dargestellt ist, läßt sich die Festdrossel 13 in einfacher Weise mit einem Druckbegrenzungsventil 21 zu einer Baueinheit kombinieren. In einem Gehäuse 22 ist ein axial verschiebliches Drosselorgan 23 angeordnet, das mittels einer Druckfeder 24 gegen einen Sitz 25 angedrückt wird. Das Drosselorgan 23 ist mit einer Drosselöffnung 26 versehen, deren Querschnitt und Länge so ausgelegt sind, daß der bei allen Betriebsbedingungen auftretende Hochdruck kleiner als 14 MPa ist. Die Druckfeder 24 ist mittels einer Einstellschraube oder Einstellmutter 27 so vorgespannt, daß, sobald ein erhöhter Hochdruck auftritt, das Drosselorgan 23 von dem Sitz 25 abhebt und einen entsprechend großen Querschnitt freigibt und somit den Druck begrenzt.

Bei der erfindungsgemäßen Ausführungsform enthält die Festdrossel 13 ein umschaltbares Drosselelement, das mit mehreren jeweils wahlweise zum Einsatz bringbaren Drosselöffnungen versehen ist, die auf unterschiedliche Hochdrücke ausgelegt sind. Das Umschalten das Drosselelementes auf die jeweils geeignete Drosselöffnung wird mittels des Steuergerätes 16 gesteuert, wodurch unterschiedliche Hochdruckbereiche vorgegeben werden können.

Dieses Umschalten auf eine der Drosselöffnungen erfolgt abhängig von dem Druck im Hochdruckabschnitt oder auch in dem Niederdruckabschnitt und/oder der Umgebungstemperatur. Auf diese Weise ist es möglich, ohne aufwendige Regelung der Drosselquerschnitte mittels eines Expansionsventils in gewissem Umfang eine Anpassung des Hochdrucks in dem Hochdruckabschnitt an die Umgebungstemperatur vorzunehmen, um damit die Kälteleistung und die Leistungszahl zu verbessern.

Bei einer anderen Ausführungsform werden zwei oder mehrere Festdrosseln, die beispielsweise entsprechend Fig. 3 mit einem Druckbegrenzungsventil kombiniert sind, parallel geschaltet. Jede der Festdrosseln ist vorzugsweise mit einer anderen Drosselöffnung versehen, die auf unterschiedliche Hochdrücke ausgelegt sind. Diesen Festdrosseln werden ein oder mehrere Absperrventile zugeordnet, die von der Steuereinheit 16 derart ansteuerbar sind, daß jeweils eine oder mehrere der Festdrosseln angesteuert und freigegeben werden, die einen für die geforderte Kälteleistung bei annähernd optimaler Leistungszahl geeigneten Hochdruckbereich festlegen.

## Patentansprüche

1. Mit CO₂ betreibbare Klimaanlage für ein Fahrzeug mit einem an den Ausgang eines Kompressors (10) angeschlossenen Hochdruckabschnitt, der einen Gaskühler (11) enthält, mit einem an die Saugseite des Kompressors angeschlossenen Niederdruckabschnitt, der einen Verdampfer (14) enthält, und mit einem zur Druckbegrenzung in den Betriebszuständen zwischen dem Hochdruckabschnitt und dem Niederdruckabschnitt vorgesehenen Expansionsorgan (13), welches in allen Betriebszuständen den Druck im Hochdruckabschnitt auf Werbe von weniger als 14 MPa begrenzt,
**dadurch gekennzeichnet, daß** als Expansionsorgan eine Festdrossel (13) vorgesehen ist,
die ein umschaltbares Drosselelement mit wenigstens zwei unterschiedlichen Drosselöffnungen enthält, und daß parallel zur Festdrossel (13) ein Druckbegrenzungsventil (21) geschaltet ist.

2. Klimaanlage nach Anspruch 1, **dadurch gekennzeichnet, daß** die Festdrossel (13) und das Druckbegrenzungsventil (21) als eine Baueinheit ausgebildet sind.

3. Klimaanlage nach Anspruch 1 und 2, **dadurch gekennzeichnet, daß** dem Gaskühler (11) ein mit wenigstens zwei Leistungsstufen betreibbares Gebläse (19) zugeordnet ist.

4. Klimaanlage nach einem der Ansprüche 1 bis 3, **dadurch gekennzeichnet, daß** zwei oder mehr parallel geschaltete Festdrosseln (13) vorgesehen und wahlweise einsetzbar sind.

5. Klimaanlage nach einem der Ansprüche 1 bis 4, **dadurch gekennzeichnet, daß** für eine bevorzugte Leistung der Klimaanlage von 7 kW die Drosselöffnung der Festdrossel (13) etwa 1,0 mm Durchmesser und eine Länge von etwa 10 mm aufweist.

## Claims

1. CO₂-operated air-conditioning system for a vehicle comprising a high-pressure section connected to the output of a compressor (10), containing a gas cooler (11), comprising a low-pressure section connected to the suction side of the compressor, container a vaporiser (14), and comprising an expansion member (13) provided between the high-pressure section and the low-pressure section to limit the pressure in the operating states, which limits the pressure in the high-pressure section in all operating states to values of less than 14 MPa,
**characterised in that** a fixed throttle (13) is provided as the expansion member, which contains a switchable throttle element with at least two different throttle openings and that a pressure-limiting valve (21) is switched in parallel to the fixed throttle (13).

2. The air-conditioning system according to claim 1, **characterised in that** the fixed throttle (13) and the pressure-limiting valve (21) are constructed as a structural unit.

3. The air-conditioning unit according to claim 1 and 2, **characterised in that** a fan (19) which can be operated with at least two power stages is assigned to the gas cooler (11).

4. The air-conditioning system according to any one of claims 1 to 3, **characterised in that** two or more fixed throttles (13) switched in parallel are provided and can be used as desired.

5. The air-conditioning system according to any one of claims 1 to 4, **characterised in that** for a preferred power of the air-conditioning system of 7 kW the throttle opening of the fixed throttle (13) has a diameter of about 1.0 mm and a length of about 10 mm.

## Revendications

1. Climatiseur pouvant fonctionner au CO₂ pour véhicule, comprenant une section à haute pression raccordée à la sortie d'un compresseur (10) et qui contient un refroidisseur de gaz (11), une section à basse pression raccordée au côté aspiration du compresseur et qui contient un vaporiseur (14), et un organe d'expansion (13) prévu pour limiter la pression dans les états de fonctionnement entre la section à haute pression et la section à basse pression et qui, dans tous les états de fonctionnement, limite la pression dans la section à haute pression à des valeurs inférieures à 14 MPa,
**caractérisé en ce que**
il est prévu comme organe d'expansion un restricteur fixe commutable (13) qui présente au moins deux ouvertures de restriction différentes et qu'une soupape de limitation de pression est branchée parallèlement au restricteur fixe (13).

2. Climatiseur selon la revendication 1, **caractérisé en ce que** le restricteur fixe (13) et la soupape de limitation de pression (21) sont réalisés sous forme d'une unité de construction.

3. Climatiseur selon les revendications 1 et 2, **caractérisé en ce qu'**au refroidisseur de gaz (11) est associée une soufflerie (19) pouvant fonctionner avec au moins deux niveaux de puissance.

4. Climatiseur selon une des revendications 1 à 3, **caractérisé en ce qu'**il est prévu deux restricteurs fixes (13) ou plus branchés parallèlement, qui sont utilisables au choix.

5. Climatiseur selon une des revendications 1 à 4, **caractérisé en ce que**, pour un rendement privilégié du climatiseur de 7 kW, l'ouverture de restriction du restricteur fixe (13) présente un diamètre d'environ 1,0 mm et une longueur d'environ 10 mm.
